# EUROPÄISCHE PATENTSCHRIFT

(11) **EP 0 723 941 B1**
(45) Veröffentlichungstag und Bekanntmachung des Hinweises auf die Patenterteilung: **13.10.1999**
(21) Anmeldenummer: 96100313.4
(22) Anmeldetag: 11.01.1996
(51) Int. Cl.: C03C 3/066, C03C 3/089, C03C 8/20, C03C 17/04, C03C 17/36, C03B 23/03

(54) **Bleifreie Glaszusammensetzung und deren Verwendung**
Lead-free glass composition and its use
Composition de verre exempt de plomb et son utilisation

(30) Priorität: 28.01.1995 DE 19502653
(43) Veröffentlichungstag der Anmeldung: 31.07.1996
(73) Patentinhaber: CERDEC AKTIENGESELLSCHAFT KERAMISCHE FARBEN, D-60327 Frankfurt (DE)
(72) Erfinder: Tünker, Gerhard, D-63075 Offenbach (DE); Paulus, Hildegard, D-60433 Frankfurt (DE)

(56) Entgegenhaltungen:
- EP-A- 0 362 136
- EP-A- 0 370 683
- EP-A- 0 505 892
- EP-A- 0 518 610
- DE-A- 1 496 493
- GB-A- 1 007 296
- US-A- 2 753 271
- US-A- 3 017 279
- US-A- 3 216 847

## Beschreibung

Die Erfindung richtet sich auf eine neue bleifreie Glaszusammensetzung, eine Glasfritte dieser Zusammensetzung und ein Verfahren zu ihrer Herstellung. Ein weiterer Gegenstand der Erfindung richtet sich auf eine die erfindungsgemäße Glasfritte enthaltende Farbzubereitung und deren Verwendung zur Herstellung von Glasemails und keramischen Dekoren auf einbrennfähigen Substraten, insbesondere Glas.

Zur Dekoration von Glasartikeln, insbesondere Glasscheiben, werden Glasfarben verwendet, welche eine oder mehrere farbgebende Komponenten und ein oder mehrere Glasfritten enthalten. Die Glasfarbe wird nach dem Auftrag auf dem Substrat eingebrannt, wobei sich ein Glasemail ausbildet. Bei der Applikation von Glasfarben auf Glasscheiben muß das Schmelzverhalten der Glasfarben den typischen Bedingungen des Biege- und Vorspannungsprozesses angepaßt sein. Typische Einbrennbedingugnen sind Glastemperaturen zwischen etwa 600 und 650 °C und Brennzeiten von wenigen Minuten. Für die farbliche Dekorierung von Glasscheiben im Architektur- und Geräteglasbereich ist eine gute Verträglichkeit der in der Glasfarbe enthaltenen Glasfritte mit üblichen anorganischen Farbpigmenten erforderlich.

Speziell im Autoglasbereich werden schwarze Glasfarben benötigt, die eine möglichst gute Opazität besitzen. Darüber hinaus muß bei Heckscheiben eine Bedruckung der mit einer Glasfarbe beschichteten Glasscheibe mit einer Silberleitpaste zwecks Ausbildung von Leiterbahnen möglich sein. Schließlich sollte während des Einbrennvorgangs und Verformung der Scheibe eine Migration von Silber durch die Farbe in das Glas vermieden werden, da die Migration zu einer Gelbfärbung des Floatglases führt. Eine weitere Anforderung an Glasfarben für den Autoglasbereich besteht darin, daß die aufgeschmolzene Farbe beim Verformen der Scheibe nach dem sogenannten Preß-Biege-Verfahren nicht mit dem Preßwerkzeug verkleben darf.

Von der eingebrannten Glasfarbe, also dem Glasemail, wird in vielen Einsatzbereichen, darunter auch dem Autoglasbereich, eine hohe Säurebeständigkeit gegen Galvanoelektrolyte (pH kleiner 1) gefordert. Schließlich sollte in der in der Glasfarbe enthaltenen Glasfritte kein Blei oder Cadmium enthalten sein.

In der Fachwelt sind verschiedene blei- und cadmiumfreie Glasfritten und sie enthaltende Farbzubereitungen für verschiedene Anwendungen, darunter die Ausbildung von Glasemails auf Autoglasscheiben, bekannt. Üblicherweise handelt es sich hierbei um Frittensysteme auf der Basis eines Wismut-Alkali-Borsilikatglases oder eines Alkali-Zink-Borsilikatglases oder Mischungen davon.

Bekannte Glasfrittensysteme erfüllen die vorgenannten Erfordernisse nur teilweise: So basiert die blei- und cadmiumfreie Glasfritte gemäß EP-A 0 267 154 auf einem Gehalt an Na₂O, ZnO, B₂O₃ und SiO₂ und kann einige weitere Oxide, wie Bi₂O₃ und Li₂O, enthalten. Wie die Beispiele zeigen, erfüllen aber nur Glasfritten mit einem Bi₂O₃- oder Li₂O-Gehalt den für die Anwendung auf Glas geforderten Aufschmelzbereich von deutlich unterhalb 650 °C. Nachteilig an lithiumhaltigen Glasfritten ist, daß es hiermit zur Verminderung der Bruchfestigkeit von damit emaillierten Glasscheiben kommt.

In der EP-A 0 370 683 werden ein Glasfluß mit 45 bis 65 Gew.-% Bi₂O₃ sowie eine solche Fritte enthaltende Farbzubereitungen zur Herstellung von Glasemails beschrieben. Durch Verwendung derartiger Farbzubereitungen zur Herstellung von emaillierten Autoglasscheiben wird das Kleben der damit bedruckten Scheiben in der Biegeform vermieden. Dies wird erreicht durch einen Kristallisationsprozeß, der nach dem Aufschmelzen der Farbe einsetzt. Glasfritten mit hohem Wismutgehalt zeigen zwar verbesserte Eigenschaften, jedoch sind derartige Fritten in Abhängigkeit vom Wismutgehalt viel teurer als wismutarme oder wismutfreie Glasfritten. Zudem enthält der Glasfluß auch 2 bis 6 Gew.-% Li₂O, was zu einer deutlichen Schwächung der Bruchfestigkeit des emaillierten Glases, besonders bei Mehrfachdrucken, führt.

Einen ähnlichen Lösungsweg, das Kleben beschichteter Glasscheiben beim Preß-Biege-Prozeß zu vermeiden, beschreibt die WO 92/0429: Die Zusammensetzung, welche während des Einbrennens ein Email bildet, enthält eine kristallisierbare Glasfritte und Keimbildner auf der Basis von Zn₂SiO₄. Nachteilig ist, daß Glasemails auf der Basis von Zinksilikaten nur eine mäßige Säurebeständigkeit besitzen, so daß eine Verwendung in Galvanobädern nicht möglich ist.

Anti-Stick-Glasfarben, wie sie in der US 4,959,090 beschrieben werden, sind für den Einsatz zur Herstellung emaillierter gebogener Glasscheiben in Preßbiegeöfen geeignet. Zur Erzielung der Anti-Stick-Eigenschaft enthalten die Farbzubereitungen Metallpulver. Nachteilig an den hiermit erzeugten Glasemails ist deren ungenügende Säurebeständigkeit: Zudem kommt es zu einer Verfärbung der schwarzen Farben zu grau- oder braunstichigen Farbtönen.

Das bekannte Problem der Silberdiffusion aus einer auf die Emailfarbe gedruckten Silberpaste während des Einbrennens läßt sich gemäß EP-A 0 504 682 dadurch beheben, daß zur Herstellung einer bleihaltigen Fritte Sulfide oder Polysulfide zugegeben werden. Derartige Emailfarben enthalten aber das unerwünschte Blei. Für den gleichen Zweck werden gemäß EP-A 0 505 892 bleifreie Glasfritten, die Schwefel oder Sulfide gelöst enthalten, offenbart; die Fritten enthalten einen hohen Anteil an Zinkoxid, wodurch die Säurebeständigkeit wiederum gemindert wird.

Das US-Patent 3,216,847 lehrt eine Zusammensetzung (Gew.-%) eines weißen Emails für Gußeisen: Na₂O 0-15, K₂O 5-19, Li₂O 0-4, B₂O₃ 10-20, SiO₂ 38-48, TiO₂ 18-28, Al₂O₃ 0-3, P₂O₅ 0-3, As₂O₃ 0-3, MgO und/oder ZnO 0-3, wobei mindestens 1 Gew.-% Li₂O und/oder Na₂O anwesend sein müßen. Die Einbrenntemperatur beträgt 825 bis 875 °C. Ausgenommen die Fritte des Beispiels 3 mit 1 % Li₂O und 0 % Na₂O enthalten alle weiteren Beispiele etwa 5 bis 6 % Na₂O.

Aufgabe der vorliegenden Erfindung ist demgemäß, eine neue Glaszusammensetzung, insbesondere in Form einer Glasfritte, aufzuzeigen, welche sich zur Herstellung von Glasuren, Emails, insbesondere Glasemails, und anderen keramischen Dekorüberzugsmassen in ihrem gesamten Eigenschaftsbild besser eignet als die vorbekannten Systeme. Die neuen Glaszusammensetzungen sollten im wesentlichen blei-, zink- und lithiumfrei sein, um die zuvor aufgezeigten nachteiligen Einflüsse dieser Elemente zu vermeiden.

Die Aufgabe wird gelöst durch eine Glaszusammensetzung, enthaltend (in Mol-%)

| | |
|---|---|
| K₂O | 10 - 17 |
| B₂O₃ | 10 - 25 |
| TiO₂ | 15 - 30 |
| SiO₂ | 35 - 55 |
| Al₂O₃ | 0 - 5 |
| Bi₂O₃ | 0 - 5 |
| S | 0 - 3 |

und weniger als 5 Gew.-% anderen Oxiden, wobei die Glaszusammensetzung im wesentlichen frei ist von Oxiden aus der Reihe PbO, CdO, ZnO, Li₂O, Na₂O, MgO, CaO, SrO, BaO und P₂O₅, jedenfalls sie in einer Menge von jeweils weniger als 0,5 Gew.% enthält.

Vorzugsweise besteht die Glaszusammensetzung aus (in Mol-%)

| | |
|---|---|
| K₂O | 10 - 17 |
| B₂O₃ | 10 - 25 |
| TiO₂ | 15 - 30 |
| SiO₂ | 35 - 50 |
| Bi₂O₃ | 0 - 3 |
| S | 0 - 2 |

und weniger als insgesamt 3 Gew.-% anderen Metalloxiden. Eine besonders bevorzugte Glaszusammensetzung besteht aus (in Mol-%)

| | |
|---|---|
| K₂O | 13 - 16 |
| B₂O₃ | 18 - 23 |
| TiO₂ | 17 - 23 |
| SiO₂ | 40 - 45 |
| Bi₂O₃ | 0 - 3 |
| S | 0 - 2. |

Üblicherweise liegt der Transformationspunkt Tg, gemessen mittels der DSC-Methode (Differential Scanning Calorimetrie) unterhalb 550 °C, vorzugsweise unter 535 °C.

Wie zuvor dargestellt, basiert die erfindungsgemäße Fritte auf K₂O, B₂O₃, TiO₂ und SiO₂. Erfindungswesentlich ist ferner, daß die Fritte im wesentlichen frei ist von PbO, P₂O₅, ZnO, Li₂O, Na₂O sowie Erdalkalimetalloxiden. Geringe Anteile (kleiner 0,5 Gew.-%) an den an sich unerwünschten Oxiden können einerseits als Verunreinigungen in den verwendeten Rohstoffen für die Glasherstellung und andererseits durch Reste eines diese unerwünschten Stoffe enthaltenden Glases im verwendeten Glasschmelzofen in die neue Glaszusammensetzung gelangen. Vorzugsweise wird der Gehalt an diesen unerwünschten Oxiden möglichst niedrig gehalten.

Zweckmäßigerweise liegt die Glaszusammensetzung in Form einer Glasfritte vor. Glasfritten sind in an sich bekannter Weise erhältlich, indem übliche Glasrohstoffe in einer molaren Zusammensetzung im wesentlichen entsprechend der Zusammensetzung der herzustellenden Glasfritte zusammengeschmolzen werden, die Schmelze abgeschreckt wird, etwa durch Einlaufenlassen eines Schmelzstrahls in Wasser, und das hierbei erhaltene brüchige Material aufgemahlen wird. Als Rohstoffe zur Herstellung der erfindungsgemäßen Glasfritte werden mit Ausnahme von K₂O, das üblicherweise in Form des Carbonats eingesetzt wird, zweckmäßigerweise direkt die Oxide eingesetzt. Sofern die Glasfritte gelösten Schwefel enthalten soll - durch die Anwesenheit von in der Glasfritte gelöstem Schwefel wird die Migration von Silber vermieden beziehungsweise gestoppt - wird Schwefel im Überschuß gegenüber der Zusammensetzung der Glasfritte eingesetzt; zweckmäßigerweise wird gleichzeitig unter reduzierenden Bedingungen geschmolzen, um einen zu hohen Austrag an gebildetem Schwefeldioxid zu vermeiden.

Nachfolgend wird auf die wesentlichen Funktionen der Hauptkomponenten der Glaszusammensetzung der Glasfritte eingegangen:

Als Alkalikomponente wird typischerweise nur Kaliumoxid eingesetzt. Dieses senkt als typischer Netzwerkwandler stark die Viskosität des Flusses und sollte deshalb mit mindestens 10 Mol-% anwesend sein. Da mit zunehmendem K₂O-Gehalt der Wärmeausdehnungskoeffizient der Glasfritte stark ansteigt, wird der obere Grenzwert auf 17 Mol-% begrenzt. Ein höherer K₂O-Gehalt führt bei der Verwendung der Glasfritte auf Glassubstraten zu Spannungen. Durch Borsäure wird der Schmelzpunkt der Fritte abgesenkt, jedoch kommt es bei einer Menge um und insbesondere oberhalb 25 Mol-% zu einer Verschlechterung der Säurebeständigkeit. Durch die Anwesenheit von Titandioxid wird einerseits die Säurebeständigkeit erhöht, andererseits bei Konzentrationen über 15 Mol-% die Viskosität der Glasschmelze abgesenkt. Überraschenderweise läßt sich trotz des relativ hohen Titandioxidgehalts in der erfindungsgemäßen Glaszusammensetzung die Glasfritte homogen und ohne vorzeitige Kristallisationseffekte erschmelzen. SiO₂ dient als Glasbildner; ein Gehalt unter 35 Mol-% SiO₂ führt zu einer unerwünschten Absenkung der Säureresistenz. Aluminiumoxid kann als fakultativer Bestandteil in geringer Menge in der Glaszusammensetzung enthalten sein. Durch die Anwesenheit von Wismutoxid wird einerseits die chemische Beständigkeit erhöht, andererseits der Schmelzpunkt abgesenkt. Die Verwendung von Bi₂O₃ ist jedoch nicht notwendig. Wie bereits zuvor ausgeführt, dient ein Zusatz von Schwefel in der Glaszusammensetzung zur Verminderung der Silbermigration in Autoglasfarben; im allgemeinen führt ein Gehalt von etwa 0,5 Mol-% Schwefel bereits zu einer ausreichenden Reduktion der Silbermigration.

Wie bereits zuvor angesprochen, lassen sich die erfindungsgemäßen Glasfritten zu einer porenfreien Glasschicht aufschmelzen. Nach dem eigentlichen Schmelzprozeß kommt es zu Kristallisationseffekten, welche im Hinblick auf die Verwendbarkeit der Glasfritte in Glasfarben für den Autoglasbereich zwecks Vermeidung des Klebens beim Preß-Biege-Verfahren erwünscht sind. Die Mindestschmelztemperatur Tₛ bevorzugter erfindungsgemäßer Glasfritten liegt unter 640 °C, vorzugsweise im Bereich zwischen 590 und 620 °C. Die Mindestschmelztemperatur Tₛ wird im 4-Minuten-Brand auf Glas als Substrat ermittelt; als Beurteilungskriterium wird die Porenfreiheit der aufgeschmolzenen und damit eingebrannten Glasfritte herangezogen. Sofern im Hinblick auf die Anwendung eine niedrigere Mindesteinschmelztemperatur gewünscht wird, läßt sich eine solche durch Verwendung eines Gemischs aus einer erfindungsgemäßen Glasfritte und einer vorbekannten blei- und lithiumfreien Glasfritte mit niedrigerer Schmelztemperatur erzielen.

Überraschenderweise zeigen die eingebrannten erfindungsgemäßen Glasfritten auch eine sehr gute Säurebeständigkeit gegen 3 gew.-%ige Salzsäure bei Raumtemperatur nach 5 Minuten Einwirkungszeit. Unter Zugrundelegung einer 5-stufigen Beurteilungsskala (1 = abgelöst; 2 = abreibbar, 3 = matt, 4 = schwacher Angriff, 5 = kein Angriff) kann der eingebrannten erfindungsgemäßen Glasfritte eine Säurebeständigkeit im Bereich zwischen 3 und 5, vorzugsweise zwischen 4 und 5, zugeordnet werden.

Aufgrund des unerwartet günstigen Eigenschaftsbilds der erfindungsgemäßen Glaszusammensetzung lassen sich Glasfritten mit dieser Zusammensetzung sehr gut zur Herstellung von Glasemails und anderen keramischen Dekoren verwenden. Für derartige Zwecke werden Farbzubereitungen eingesetzt, welche mindestens eine Glasfritte und ein anorganisches keramisches Farbpigment und/oder eine Farbfritte enthalten. Eine erfindungsgemäße Farbzubereitung zur Herstellung von Glasemails enthält: eine oder mehrere erfindungsgemäße Glasfritten in einer Menge von 35 bis 97 Gew.-%, ein oder mehrere Farbpigmente in einer Menge von 3 bis 30 Gew.-% und eine oder mehrere andere blei- und lithiumfreie Glasfritten mit einem gegenüber der erfindungsgemäßen Glasfritte niedrigeren Schmelzpunkt in einer Menge von 0 bis 35 Gew.-%, etwa solche, wie sie in den zuvor zitierten Dokumenten beschrieben sind. Als Farbpigmente eigen sich die bekannten oxidischen, sulfidischen und nitridischen Farbpigmente, soweit sie unter den Einbrennbedingungen stabil sind. Bei Glasfarben für den Autoglassektor werden vorzugsweise oxidische Pigmente, etwa solche auf Spinellbasis, verwendet.

Die Farbzubereitungen können im Trockenauftrag oder vorzugsweise nach Überführung in eine Farbpaste unter Verwendung eines üblichen Mediums mittels Spritz-, Gieß- oder Siebdruckauftrag auf das Substrat aufgetragen werden. Die Farbpaste enthält eine solche Menge an einer zuvor beschriebenen Farbzubereitung, daß sie eine spritz-, gieß- oder siebdruckfähige Konsistenz aufweist. Zur Herstellung der Farbpaste wird ein für derartige Zwecke handelsübliches Medium verwendet; Siebdruckmedien enthalten im wesentlichen ein zur Suspendierung der Feststoffe geeignetes flüssiges organisches, organisch-wäßriges oder wäßriges Lösungsmittel, ein polymeres organisches Bindemittel und nach Bedarf Hilfsmittel zur Einstellung der rheologischen Eigenschaften der Paste sowie zur Beschleunigung des Trocknens nach dem Bedrucken.

Zur Herstellung eines Glasemails oder anderen keramischen Dekors auf einem einbrennfähigen Substrat schließt sich an das Aufbringen einer Schicht der email- beziehungsweise dekorbildenden Zusammensetzung auf dem Substrat der Brand bei einer substratangepaßten Temperatur an.

Zur Herstellung emaillierter Scheiben für den Kraftfahrzeugbereich wird üblicherweise die Farbe im Siebdruckverfahren aufgetragen; nach dem Trocknen findet der Einbrand während des üblichen Biege- und Vorspannprozesses statt. Die erfindungsgemäßen Farbpasten weisen gute Anti-Sticking-Eigenschaften auf, so daß sie ohne Verklebungsprobleme in Preß-Biege-Öfen eingebrannt werden können. In solchen Öfen erfolgt das Einbrennen und Formgeben bei einer Temperatur um und insbesondere unterhalb 650 °C, vorzugsweise bei einer Temperatur zwischen 610 und 640 °C, bei Brennzeiten von im allgemeinen zwischen 2 und 5 Minuten. Sofern auf der Glasscheibe auch eine Leiterbahn angeordnet sein soll, wird nach dem Bedrucken der Glasplatte mittels einer erfindungsgemäßen Farbpaste nach dem Trocknen derselben eine Silberleitpaste aufgetragen, zweckmäßigerweise gleichfalls im Siebdruckverfahren. Das so beschichtete System wird in einem einzigen Brand eingebrannt, wobei sich die Leiterbahn fest mit der Glasemailschicht verbindet.

Die erfindungsgemäße Glaszusammensetzung sowie die damit hergestellten Gegenstände zeichnen sich durch eine Reihe herausragender Eigenschaften aus: Sie sind im wesentlichen frei von Blei und Cadmium, was aus Umwelt- und toxikologischen Gründen von Bedeutung ist. Durch die weitgehende Abwesenheit von Lithiumverbindungen besteht keine Gefahr einer Verminderung der Bruchfestigkeit von mit der Glaszusammensetzung emaillierten Glasscheiben. Glasemails mit der erfindungsgemäßen Glaszusammensetzung zeigen, insbesondere wenn sie gelösten Schwefel enthalten, eine verminderte Silberdiffusion. Da die erfindungsgemäße Glaszusammensetzung kein oder nur eine niedrige Menge an Wismutoxid enthält, bedarf es keiner oder nur geringen Verwendung an teuerem Wismutoxid. Unter Verwendung der Glaszusammensetzung hergestellte Glasemails zeigen ein ausgezeichnetes porenfreies Schmelzverhalten; erst nach dem vollständigen Ausschmelzen kommt es zu Kristallisationserscheinungen, was im Hinblick auf die Verwendung in Glasemails für im Preß-Biege-Verfahren verformte Glasscheiben für den Kraftfahrzeugbereich von Bedeutung ist. Schließlich ist die hohe Säureresistenz der unter Verwendung der erfindungsgemäßen Glaszusammensetzung erhaltenen Glasemails oder keramischen Dekore hervorzuheben. Die Eigenschaft der Kristallisation nach dem Aufschmelzen der Glaszusammensetzung macht Glasfritten mit dieser Zusammensetzung auch besonders geeignet als Bestandteil von weißen Dekorfarben zur Herstellung keramischer Dekore. Derartige weiße Dekorfarben, welche außer der Glasfritte übliche Weißpigmente enthalten können, zeichnen sich durch einen außergewöhnlichen Weißgrad aus.

### Beispiele 1 bis 6

Einige typische Zusammensetzungen (in Mol-%) der erfindungsgemäßen Fritten sind in der folgenden Tabelle zusammengestellt: Darüber hinaus enthält die Tabelle gemessene Eigenschaften: Transformationspunkt T_{g} mittels DSC-Methode, Mindestschmelztemperatur Tₛ beim 4-Minuten-Brand auf Glas sowie die Säurebeständigkeit (SB) der eingebrannten Farbe gegen 3 %ige HCl bei Raumtemperatur nach 5 min Einwirkzeit (5-stufige Skala: 1 = abgelöst; 2 = abreibbar, 3 = matt, 4 = schwacher Angriff, 5 = kein Angriff).

| Beispiel | Zusatz (Mol-%) | K₂O (Mol-%) | B₂O₃ (Mol-%) | TiO₂ (Mol-%) | SiO₂ (Mol-%) | T_{g} in °C | Tₛ in °C | SB |
|---|---|---|---|---|---|---|---|---|
| 1 | | 10 | 20 | 20 | 50 | 535 | 680 | 5 |
| 2 | 2 Na₂O | 10 | 20 | 20 | 48 | 528 | 710 | |
| 3 | | 15 | 25 | 25 | 35 | 521 | 620 | 3 |
| 4 | | 15 | 21,7 | 21,7 | 41,6 | 531 | 630 | 5 |
| 5 | 2,5 Bi₂O₃ | 15 | 19,2 | 21,7 | 41,6 | 528 | 610 | 5 |
| 6 | 1,5 S | 15 | 23,5 | 17,5 | 42,5 | 525 | 620 | 4 |

Die Beispiele 1 und 2 zeigen, daß bei Gehalten von 10 Mol-% Kaliumoxid die Schmelztemperaturen für eine alleinige Anwendung auf Glas sehr hoch sind, so daß eine Verwendung in Abmischung mit einer niedriger schmelzenden Fritte angezeigt ist. Beispiel 2 zeigt, daß die Einführung von Na₂O die Einbrenntemperatur in unerwünschter Weise weiter erhöht. Beispiel 3 zeigt eine mittlere Säurebeständigkeit, was auf den hohen B₂O₃-Gehalt zurückgeführt wird.

Die Beispiele 4 bis 6 zeigen Frittezusammensetzungen, die für die Verwendung in Glas- und Dekorfarben aufgrund der guten Säurebeständigkeit und der niedrigen Einbrenntemperaturen hervorragend geeignet sind.

### Beispiel 7

### Herstellung einer weißen Dekorfarbe für Geräteglas

90 Gew.-teile der Fritte gemäß Beispiel 5 wurden mit 10 Gew.-teilen eines üblichen TiO₂ Weißpigments auf Anatasbasis in einer Kugelmühle mit Wasser auf eine mittlere Korngröße D 50 % von 5 µm vermahlen. Das Pulver wurde getrocknet und mit einem üblichen Siebdruckmedium (Cerdec 80858) im Verhältnis 100 Gew.-teile Pulver zu 40 Gew.-teilen Medium siebdruckfertig angepastet. Gedruckt wurde mit einem Siebgewebe 43 T auf 4 mm Klarglas. Der Einbrand erfolgte bei 630 °C Glastemperatur in 4 min. Die eingebrannte Farbe zeigte einen hevorragenden Weißgrad und eine sehr gute Säurebeständigkeit.

### Beispiele 8 bis 11

### Herstellung von schwarzem Glasemail auf Autoglas

Als Ausgangsstoffe für verschiedene schwarze Dekorfarben dienten jeweils feingemahlene Fritte- und Farbkörperpulver. Hauptkomponente war die Fritte gemäß Beispiel 6. Die zweite Fritte war eine handelsübliche bleifreie wismuthaltige Fritte mit einer Mindesteinschmelztemperatur von 600 °C nach 4 min Einbrennzeit. Als Farbkörper diente ein handelsübliches Schwarzpigment auf Co-, Mn-, Fe-, Cr-Spinellbasis. Die Rohstoffe wurden in verschiedenen Verhältnissen trocken gemischt und mit einem üblichen Siebdruckmedium (Cerdec 80893) mittels Mischer und Dreiwalzwerk angepastet.

Die erhaltenen Farbpasten wurden mit einem 62 T-Sieddruckgewebe auf die Badseite von 4 mm Grünglas gedruckt und bei 130 °C getrocknet. Anschließend erfolgte ein Aufdruck einer mäanderförmigen Leiterbahn aus einer 65 gew.-%igen Silberleitpaste (Cerdec SP 627) mittels eines 100 T Gewebes.

Der Einbrand der Farben erfolgte unter einheitlichen Bedingungen bei 660 °C Ofentemperatur zwischen 3 und 4,5 min. An den eingebrannten Farben wurden beurteilt:
- TL: Lichttransmission in %
- Glanz: Reflektometer Tri-Gloss bei 85 °
- t min: Mindesteinbrennzeit in Minuten bei 660 °C Ofentemperatur
- Säurebeständigkeit: 3 %ige HCl nach 5 min Einwirkzeit
- Silberdurchschlag: Verfärbung des Glases unter dem Silberdruck

| Beispiel | Fritte Nr. 6 | Fritte bleifrei | Farbkörper | TL | Glanz | t 660 °C | Säurebeständigkeit | Ag-Durchschlag |
|---|---|---|---|---|---|---|---|---|
| 8 | 80 | 0 | 20 | 0,09 | 12 | 4 | 4 | nein |
| 9 | 70 | 15 | 15 | 0,15 | 8,5 | 4 | 4 | nein |
| 10 | 60 | 15 | 25 | 0,03 | 7,6 | 4 | 4 | nein |
| 11 | 50 | 25 | 25 | 0,03 | 9,5 | 3,5 | 4 | nein |

Die Versuche ergaben, daß die Farben gekennzeichnet sind durch eine hervorragende Opazität TL <0,2 % und eine sehr matte Oberfläche. Eine braune oder bläuliche Verfärbung des Floatglases unter dem Silberdruck wird nicht beobachtet. Die Einbrennbedingungen sowie die Säurebeständigkeit genügen im vollem Umfang den technischen Erfordernissen.

## Patentansprüche

1. Glaszusammensetzung, enthaltend (in Mol-%)
| | |
|---|---|
| K₂O | 10 - 17 |
| B₂O₃ | 10 - 25 |
| TiO₂ | 15 - 30 |
| SiO₂ | 35 - 55 |
| Al₂O₃ | 0 - 5 |
| Bi₂O₃ | 0 - 5 |
| S | 0 - 3 |
und weniger als 5 Gew.-% anderen Oxiden, wobei die Glaszusammensetzung im wesentlichen frei ist von Oxiden aus der Reihe PbO, CdO, ZnO, Li₂O, Na₂O, MgO, CaO, SrO, BaO und P₂O₅, jedenfalls sie in einer Menge von jeweils weniger als 0,5 Gew.% enthält.

2. Glaszusammensetzung nach Anspruch 1,
bestehend aus (in Mol-%)
| | |
|---|---|
| K₂O | 10 - 17 |
| B₂O₃ | 10 - 25 |
| TiO₂ | 15 - 30 |
| SiO₂ | 35 - 50 |
| Bi₂O₃ | 0 - 3 |
| S | 0 - 2 |
und weniger als insgesamt 3 Gew.-% anderen Metalloxiden.

3. Glaszusammensetzung nach Anspruch 2,
bestehend aus (in Mol-%)
| | |
|---|---|
| K₂O | 13 - 16 |
| B₂O₃ | 18 - 23 |
| TiO₂ | 17 - 23 |
| SiO₂ | 40 - 45 |
| Bi₂O₃ | 0 - 3 |
| S | 0 - 2. |

4. Glasfritte, gekennzeichnet durch die Zusammensetzung gemäß einem der Ansprüche 1 bis 3.

5. Glasfritte nach Anspruch 4,
dadurch gekennzeichnet,
daß die Mindestschmelztemperatur Tₛ beim 4-Minutenbrand weniger als 640 °C beträgt.

6. Glasfritte nach Anspruch 5,
dadurch gekennzeichnet,
daß die Mindestschmelztemperatur Tₛ beim 4-Minutenbrand zwischen 590 und 620 °C liegt.

7. Farbzubereitung zur Herstellung von Glasemails, enthaltend eine oder mehrere Glasfritten und ein oder mehrere anorganische keramische Farbpigmente,
dadurch gekennzeichnet,
daß sie 35 bis 97 Gew.-% einer oder mehrerer Glasfritten gemäß einem oder mehreren der Ansprüche 4 bis 6, 3 bis 30 Gew.-% eines oder mehrerer Farbpigmente und 0 bis 35 Gew.-% einer oder mehrerer anderer im wesentlichen blei- und lithiumfreier Glasfritten mit gegenüber den anwesenden Glasfritten gemäß einem der Ansprüche 4 bis 6 niedrigeren Schmelztemperatur enthält.

8. Farbpaste zur Herstellung von Glasemails,
dadurch gekennzeichnet,
daß eine Farbzubereitung gemäß Anspruch 7 in einem flüssigen Medium in einer für eine spritz-, gieß- oder siebdruckfähige Konsistenz entsprechenden Menge suspendiert ist.

9. Verfahren zur Herstellung eines Glasemails auf einem einbrennfähigen Substrat, insbesondere Glas, umfassend Aufbringen einer Schicht einer emailbildenden Zusammensetzung auf das Substrat und Einbrennen bei substratangepaßter Temperatur,
dadurch gekennzeichnet,
daß man als emailbildende Zusammensetzung eine Farbzubereitung gemäß Anspruch 7 oder eine Farbpaste gemäß Anspruch 8 verwendet.

10. Verfahren nach Anspruch 9,
dadurch gekennzeichnet,
daß das Substrat eine Glasscheibe ist und das Einbrennen bei einer Temperatur unterhalb 650 °C vorgenommen wird.

11. Verfahren nach Anspruch 10,
dadurch gekennzeichnet,
daß das mit einer glasemailbildenden Zusammensetzung beschichtete Glas während oder nach dem Einbrennen verformt wird.

12. Verfahren nach Anspruch 11,
dadurch gekennzeichnet,
daß beim Einbrennen eine Verformung nach dem Pressbiegeverfahren vorgenommen wird.

13. Mit einem Glasemail beschichtetes Substrat, insbesondere Glas,
dadurch gekennzeichnet,
daß das Email eine Zusammensetzung aufweist, wie sie durch Einbrennen einer Farbzubereitung gemäß Anspruch 7 oder einer Farbpaste gemäß Anspruch 8 erhalten wird.

14. Mit einem Glasemail beschichtetes Glas nach Anspruch 13,
dadurch gekennzeichnet,
daß auf der Glasemailschicht eine mit ihr fest verbundene Silber-Leiterbahn angeordnet ist.

15. Verfahren zur Herstellung einer Glasfritte gemäß einem der Ansprüche 4 bis 6,
dadurch gekennzeichnet,
daß man übliche Glasrohstoffe in einer Menge entsprechend, ausgenommen Schwefel, der molaren Glaszusammensetzung eines der Ansprüche 1 bis 3 bei 1000 bis 1200 °C aufschmilzt, die Schmelze abschreckt und das erhaltene brüchige Material aufmahlt.

16. Verfahren nach Anspruch 15,
dadurch gekennzeichnet,
daß man zur Herstellung einer gelösten Schwefel enthaltenden Glasfritte Schwefel im Überschuß einsetzt und unter reduzierenden Bedingungen schmilzt.

## Claims

1. Glass composition, containing (in mol-%)
| | |
|---|---|
| K₂O | 10 - 17 |
| B₂O₃ | 10 - 25 |
| TiO₂ | 15 - 30 |
| SiO₂ | 35 - 55 |
| Al₂O₃ | 0 - 5 |
| Bi₂O₃ | 0 - 5 |
| S | 0 - 3 |
and less than 5 wt-% of other oxides, whereby the glass composition is substantially free from oxides from the group consisting of PbO, CdO, ZnO, Li₂O, Na₂O, MgO, CaO, SrO, BaO and P₂O₅, at any rate it contains them in a quantity of less than 0.5 wt-% in each instance.

2. Glass composition according to claim 1,
containing (in mol-%)
| | |
|---|---|
| K₂O | 10 - 17 |
| B₂O₃ | 10 - 25 |
| TiO₂ | 15 - 30 |
| SiO₂ | 35 - 50 |
| Bi₂O₃ | 0 - 3 |
| S | 0 - 2 |
and less than a total of 3 wt-% of other metal oxides.

3. Glass composition according to claim 2,
consisting of (in mol-%)
| | |
|---|---|
| K₂O | 13 - 16 |
| B₂O₃ | 18 - 23 |
| TiO₂ | 17 - 23 |
| SiO₂ | 40 - 45 |
| Bi₂O₃ | 0 - 3 |
| S | 0 - 2. |

4. Glass frit, characterised by the composition according to one of claims 1 to 3.

5. Glass frit according to claim 4,
characterised in that
the minimum melting-temperature Tₛ during the 4-minute stoving amounts to less than 640 °C.

6. Glass frit according to claim 5,
characterised in that
the minimum melting-temperature Tₛ during the 4-minute stoving lies between 590 and 620 °C.

7. Colouring preparation for the production of glass enamels, containing one or more glass frits and one or more inorganic ceramic colouring pigments,
characterised in that
it contains 35 to 97 wt-% of one or more glass frits according to one or more of claims 4 to 6, 3 to 30 wt-% of one or more colouring pigments and 0 to 35 wt-% of one or more other substantially lead-free and lithium-free glass frits with a melting-temperature that is lower than those of the glass frits according to one of claims 4 to 6 that are present.

8. Colouring paste for the production of glass enamels,
characterised in that
a colouring preparation according to claim 7 is suspended in a liquid medium in a quantity corresponding to a consistency that is suitable for injecting, pouring or screen printing.

9. Process for the production of a glass enamel on a stovable substrate, in particular glass, comprising application of a layer of an enamel-forming composition onto the substrate and stoving at a temperature adapted to the substrate,
characterised in that
by way of enamel-forming composition use is made of a colouring preparation according to claim 7 or a colouring paste according to claim 8.

10. Process according to claim 9,
characterised in that
the substrate is a pane of glass and stoving is performed at a temperature below 650 °C.

11. Process according to claim 10,
characterised in that
the glass which is coated with a composition that forms a glass enamel is deformed during or after stoving.

12. Process according to claim 11,
characterised in that
in the course of stoving a deformation is effected in accordance with the press-and-bend process.

13. Substrate coated with a glass enamel,
characterised in that
the enamel has a composition such as is obtained by stoving of a colouring preparation according to claim 7 or of a colouring paste according to claim 8.

14. Glass coated with a glass enamel according to claim 13,
characterised in that
on the layer of glass enamel a silver conducting path is disposed which is firmly bonded to said layer.

15. Process for the production of a glass frit according to one of claims 4 to 6,
characterised in that
conventional raw materials for glass production are fused at 1,000 to 1,200 °C in a quantity corresponding, with the exception of sulfur, to the molar glass composition of one of claims 1 to 3, the melt is quenched and the brittle material obtained is ground down.

16. Process according to claim 15,
characterised in that
with a view to the production of a glass frit containing dissolved sulfur, sulfur is used in excess and is melted under reducing conditions.

## Revendications

1. Composition de verre contenant (en pourcentage molaire)
| | |
|---|---|
| K2O | 10-17 |
| B2O3 | 10-25 |
| TiO2 | 15-30 |
| SiO2 | 35-55 |
| Al2O3 | 0- 5 |
| Bi2O3 | 0- 5 |
| S | 0- 3 |
et moins de 5 % en poids d'autres oxydes, la composition de verre étant essentiellement dépourvue d'oxydes de la série PbO, CdO, ZnO, LiO₂, Na₂O, MgO, CaO, SrO, BaO et P₂O₅, ou n'en contenant qu'à une quantité toujours inférieure à 0,5 % en poids.

2. Composition de verre selon la revendication 1,
constituée de (en pourcentage molaire)
| | |
|---|---|
| K2O | 10-17 |
| B2O3 | 10-25 |
| TiO2 | 15-30 |
| SiO2 | 35-50 |
| Bi2O3 | 0- 3 |
| S | 0- 2 |
et de moins de 3 % en poids au total d'autres oxydes métalliques.

3. Composition de verre selon la revendication 2,
constituée de (en pourcentage molaire)
| | |
|---|---|
| K2O | 13-16 |
| B2O3 | 18-23 |
| TiO2 | 17-23 |
| SiO2 | 40-45 |
| Bi2O3 | 0- 3 |
| S | 0- 2 |

4. Verre fritté,
caractérisé par
la composition selon l'une des revendications 1 à 3.

5. Verre fritté selon la revendication 4,
caractérisé en ce que
la température minimum de fusion Tₛ à 4 minutes de cuisson est inférieure à 640°C.

6. Verre fritté selon la revendication 5,
caractérisé en ce que
la température minimale de fusion Tₛ à 4 minutes de cuisson est comprise entre 590 et 620°C.

7. Préparation de colorants pour produire des émaux de verre, contenant un ou plusieurs verres frittés et un ou plusieurs pigments colorés céramiques inorganiques,
caractérisée en ce qu'
elle contient de 35 à 97 % en poids d'un ou plusieurs verres frittés selon une ou plusieurs des revendications 4 à 6, 3 à 30 % en poids d'un ou plusieurs pigments colorés et 0 à 35 % en poids d'un ou plusieurs autres verres frittés essentiellement dépourvus de plomb et de lithium avec par rapport aux verres frittés présents selon l'une des revendications 4 à 6 une température de fusion plus faible.

8. Pâte colorée pour produire des émaux de verre,
caractérisée en ce qu'
on met en suspension une préparation de colorant selon la revendication 7 dans un milieu liquide en une quantité correspondante pour une consistance permettant la pulvérisation, l'arrosage ou la sérigraphie.

9. Procédé de production d'un émail de verre sur un substrat résistant au feu, en particulier le verre, comprenant le dépôt d'une couche d'une composition formant émail sur le substrat et la cuisson à une température adaptée au substrat,
caractérisé en ce qu'
on utilise comme composition formant émail une préparation de colorant selon la revendication 7 ou une pâte colorante selon la revendication 8.

10. Procédé selon la revendication 9,
caractérisé en ce que
le substrat est une vitre de verre et en ce que la cuisson se fait à une température inférieure à 650°C.

11. Procédé selon la revendication 10,
caractérisé en ce qu'
on forme le verre recouvert d'une composition formant émail de verre pendant ou après la cuisson.

12. Procédé selon la revendication 11,
caractérisé en ce que
lors de la cuisson on procède à un formage selon le procédé de pressage-flexion.

13. Substrat revêtu d'un émail de verre, en particulier le verre,
caractérisé en ce que
l'émail présente une composition telle qu'obtenue par cuisson d'une composition colorante selon la revendication 7 ou d'une pâte de colorant selon la revendication 8.

14. Verre revêtu d'un émail de verre selon la revendication 13,
caractérisé en ce qu'
on dispose sur la couche d'émail de verre un trajet conducteur en argent qui y est solidement lié.

15. Procédé de production d'un verre fritté selon l'une des revendications 4 à 6,
caractérisé en ce qu'
• on fait fondre des matières premières en verre en une quantité correspondant, en dehors du soufre, à la composition molaire de l'une des revendications 1 à 3 entre 1000 et 1200°C,
• on refroidit brusquement la masse fondue, et
• on broie le matériau cassant obtenu.

16. Procédé selon la revendication 15,
caractérisé en ce que
pour produire un verre fritté contenant du soufre dissous on utilise du soufre en excès et on le fait fondre dans des conditions réductrices.
